# EUROPÄISCHE PATENTSCHRIFT

(11) **EP 3 033 259 B1**
(45) Veröffentlichungstag und Bekanntmachung des Hinweises auf die Patenterteilung: **23.12.2020**
(21) Anmeldenummer: 14752563.8
(22) Anmeldetag: 14.08.2014
(51) Int. Cl.: B61H 1/00, B60T 17/00

(54) **KONDENSATIONSVORRICHTUNG FÜR PNEUMATISCHE BREMSZYLINDER**
CONDENSATION DEVICE FOR PNEUMATIC BRAKE CYLINDERS
DISPOSITIF DE CONDENSATION POUR CYLINDRES DE FREIN PNEUMATIQUES

(30) Priorität: 16.08.2013 DE 102013013637
(43) Veröffentlichungstag der Anmeldung: 22.06.2016
(73) Patentinhaber: KNORR-BREMSE Systeme für Schienenfahrzeuge GmbH, 80809 München (DE)
(72) Erfinder: ELSTORPFF, Marc-Gregory, 80638 München (DE); MATHIEU, Michael, 82178 Puchheim (DE); STEGMANN, André, 82223 Eichenau (DE); FUDERER, Erich, 82256 Fürstenfeldbruck (DE); SOUKUP, Frederic, 81247 München (DE); JUNG, Alexander, 82131 Gauting (DE)
(86) Internationale Anmeldenummer: PCT/EP2014/002249
(87) Internationale Veröffentlichungsnummer: WO 2015/022082

(56) Entgegenhaltungen:
- EP-A1- 1 048 540
- EP-B1- 1 257 454
- DE-A1-102011 014 261

## Beschreibung

Die Erfindung geht aus von einer Kondensationsvorrichtung für pneumatische Bremszylinder von Fahrzeugbremsanlagen, zum Auskondensieren von Feuchtigkeit aus der in eine sekundäre Kammer des Bremszylinders eingesaugten oder aus der sekundären Kammer verdrängten Luft, mit einem Anschluss für eine Verbindung zu der wenigstens einen sekundären Kammer des Bremszylinders, einer einerseits mit der Atmosphäre und andererseits mit dem Anschluss in Strömungsverbindung stehenden Be- und Entlüftungsöffnung sowie mit einem topfförmigen Behälter, gemäß dem Oberbegriff von Anspruch 1.

Bei solchen sekundären Kammern handelt es sich beispielsweise um eine Rückholfeder eines pneumatischen Betriebsbremszylinders aufnehmende Kammer oder eine Speicherfeder eines pneumatischen Federspeicherbremszylinders aufnehmende Kammer.

Ein Bremszylinder mit solchen sekundären Kammern ist beispielsweise aus der DE 10 2007 032 966 A1 bekannt. Dort ist ein pneumatischer Betriebsbremszylinder Bestandteil eines Krafterzeugers, durch welchen im Laufe einer Betriebsbremsung Betriebsbremskräfte über eine Bremszange auf eine Bremsscheibe einer Scheibenbremse eines Schienenfahrzeugs aufgebracht werden. Er kann als Membranzylinder oder als Kolbenzylinder mit Dichtungsmanschette ausgeführt sein. Weiterhin kann der Betriebsbremszylinder eine eingesetzte Zylinderbuchse aufweisen oder die Zylinderlauffläche kann direkt an der Innenwandung des Bremszylindergehäuses ausgebildet sein.

Zum Übertragen der Bremskräfte auf die Bremszange dient ein Getriebe, dort ein Excentergetriebe, wobei über eine an die Bremskolbenstange angelenkte Excenterwelle die Kolbenkraft entsprechend ihrem Hebelverhältnis verstärkt und auf die Zangenhebel weitergeleitet wird.

Für den Fall, dass neben der Betriebsbremse auch eine Park- oder Notbremse vorgesehen ist, umfasst der Krafterzeuger weiterhin einen Federspeicherbremszylinder. Dabei spannt wenigstens eine Speicherfeder einen Federspeicherbremskolben in Zuspannstellung vor, wobei durch Belüften einer Federspeicherbremskammer der Federspeicherbremskolben in Lösestellung und bei Entlüften in Zuspannstellung gebracht wird. Dabei wirkt die Federspeicherbremskolbenstange über die Betriebsbremskolbenstange auf die Excenterwelle und damit auf die auf die Zangenhebel der Bremszange.

Der Betriebsbremszylinder mit dem Federspeicherbremszylinder bildet dann den Krafterzeuger, welcher über das Excentergetriebe auf die Bremszange wirkt. In der Regel sind diese vier Baugruppen in einer Bremszangeneinheit miteinander verblockt, wie sie auch in der DE 10 2007 032 966 A1 dargestellt ist. Eine solche Bremszangeneinheit ist dann an einem Drehgestell befestigt und wirkt auf eine mit einer Achse mitdrehenden Bremsscheibe.

Weil durch die Bewegungen des Betriebsbremskolbens, des Federspeicherkolbens sowie der Excenterwelle die Luft in den sekundären Kammern komprimiert bzw. entspannt wird und ein Entstehen eines Über- bzw. Unterdruckes in sekundären Kammern unerwünscht ist, muss eine Be- und Entlüftung dieser sekundären Kammern nach außen vorgesehen werden. Ohne eine solche Be- und Entlüftung würde beispielsweise durch den Gegendruck die Bremskraft reduziert werden. Zudem könnten Kolbendichtungen vorzeitig verschleißen oder beschädigt werden.

Der Luftaustausch der sekundären Kammern mit der Atmosphäre hat zur Folge, dass sich bei Temperaturschwankungen im Bremszylindergehäuse Kondenswasser bilden kann. Dieses Kondenswasser kann einerseits zu Korrosion und andererseits zu Dichtigkeitsproblemen von Kolbendichtungen führen, wenn das Kondenswasser an der Innenwandung des Bremszylinders anfriert.

Weiterhin kann durch die Be- und Entlüftungsöffnungen im Bremszylindergehäuse Wasser eintreten, wenn z.B. die Bremszangeneinheit in einem durch Spritzwasser belasteten Bereich angeordnet ist, insbesondere im Bereich von Radbremsscheiben.

Nicht zuletzt kann bei Reinigung der Bremszangeneinheit bzw. Bremszylinder im Drehgestell mit einem Hochdruckreiniger Wasser in die Bremszangeneinheit bzw. in den Bremszylinder eindringen, was wegen der dabei verwendeten, meist aggressiven Reinigungsmittel besonders stark korrosiv wirkt.

Um ein Eindringen von Feuchtigkeit in sekundäre Räume von pneumatischen Bremszylindern zu verhindern, wird gemäß der gattungsbildenden EP 1 257 454 B1 eine Kondensationsvorrichtung für einen pneumatischen Bremskrafterzeuger vorgeschlagen, welche einen topfförmigen Behälter umfasst, in dem eine schraubenförmig gewundene Rohrleitung angeordnet ist, die bodenseitig des Behälters eine offene Ansaugöffnung und im Bereich der Oberseite des Behälters über einen Ansaugstutzen mit einem drucklosen Raum des Bremskrafterzeugers verbunden ist. Im schrägen Boden des Behälters ist eine Abflussöffnung zum Abfluss kondensierten Wassers angeordnet, das an den Innenwänden der Rohrleitung kondensiert und nach unten durch die Ansaugöffnung der Rohrleitung zum Boden des Behälters fließt.

Dabei muss die Rohrleitung möglichst lang sein und über seine ganze Länge ein von der Einbaulage und von der maximal möglichen Schrägstellung des Fahrzeuges abhängiges Gefälle aufweisen, damit sich abscheidendes Kondenswasser nach Außen abfließen kann. Damit wird aber der erforderliche Bauraum entsprechend groß. Steht ein ausreichend großer Bauraum nicht zur Verfügung, muss die Länge des Rohrleitung entsprechend reduziert werden, wodurch die Funktion des Kondensators beeinträchtigt wird.

In DE 10 2011 014 261 A wird eine Labyrinthdichtung für die Be- und Entlüftungsöffnung eines Bremszylinders offenbart, in der eine Kondensation stattfinden kann. EP 1 048 540 A offenbart eine Trocknerkartusche für eine Druckluftanlage mit Lochblechen, die zusätzlich mit Trocknungsmittel gefüllt sind. Die Kartusche ist vorgesehen, in dem Luftkreislauf integriert zu werden, so dass Luft aus dem Kreislauf wieder in den Kreislauf rückgeführt wird.

Der vorliegenden Erfindung liegt demgegenüber die Aufgabe zugrunde, eine Kondensationsvorrichtung der eingangs erwähnten Art derart weiter zu entwickeln, dass sie ein Eindringen von Feuchtigkeit und Schmutz in eine sekundäre Kammer eines Bremszylinders bei möglichst geringer Baugröße effektiv verhindert.

Diese Aufgabe wird erfindungsgemäß durch die Merkmale von Anspruch 1 gelöst.

### Offenbarung der Erfindung

Erfindungsgemäß ist vorgesehen, dass
- in dem topfförmigen Behälter wenigstens zwei koaxial zu einer Mittelachse des Behälters und parallel übereinander gestapelte Lochbleche angeordnet sind, von welchen wenigstens ein Lochblech ein Lochblech erster Art und wenigstens ein Lochblech ein Lochblech zweiter Art ist, wobei
- ein Lochblech erster Art und ein Lochblech zweiter Art jeweils wenigstens eine Durchgangsbohrung aufweisen und die wenigstens eine Durchgangsbohrung eines Lochblechs erster Art gegenüber der wenigstens einen Durchgangsbohrung eines Lochblechs zweiter Art in Bezug zur Mittelachse des Behälters radial versetzt angeordnet ist, und wobei
- in Gebrauchslage des Behälters die Be- und Entlüftungsöffnung in einem Boden des Behälters und ein Anschluss für die Verbindung zu der wenigstens einen sekundären Kammer in einem oberen Bereich des Behälters ausgebildet ist, und wobei
- die Lochbleche erster Art und zweiter Art in dem Behälter derart übereinander gestapelt sind, dass ein Lochblech erster Art einem Lochblech zweiter Art zumindest abschnittsweise mit Abstand derart gegenüberliegt, dass eine Strömungsverbindung zwischen der wenigstens einen Durchgangsbohrung eines Lochblechs erster Art und der wenigstens einen Durchgangsbohrung eines Lochblechs zweiter Art zustande kommen kann, und wobei
- die mittels der Be- und Entlüftungsöffnung in den Behälter einströmende, auf ein Zuspannen oder Lösen des Bremszylinders zurückzuführende Druckluftströmung die Lochbleche der Reihe nach von unten nach oben durchströmt und in den Anschluss für die Verbindung zu der wenigstens einen sekundären Kammer strömt oder die mittels des Anschlusses für die Verbindung zu der wenigstens einen sekundären Kammer in den Behälter einströmende, auf ein Zuspannen oder Lösen des Bremszylinders zurückzuführende Druckluftströmung die Lochbleche der Reihe nach von oben nach unten durchströmt und über die Be- und Entlüftungsöffnung in die Atmosphäre ausströmt.

Weil die wenigstens eine Durchgangsöffnung in dem wenigstens einen Lochblech erster Art in Bezug zu der wenigstens einen Durchgangsöffnung in dem wenigstens einen Lochblech zweiter Art radial versetzt ist, entsteht eine Strömungsumlenkung von radial innen nach radial außen bzw. von radial außen nach radial innen. Durch diese mehrmaligen Strömungsumlenkungen nach Art einer Labyrinthdichtung ergeben sich Drosseleffekte, wodurch Druckenergie und Strömungsgeschwindigkeit verloren geht. Dadurch verringert sich die Tendenz, dass durch Bremskolbenbewegungen Wassertröpfchen bzw. Schmutzpartikel von außen eingesaugt werden.

Wegen der labyrinthartigen Strömungsführung durch die Lochbleche hindurch ist weiterhin die Gefahr geringer, dass bei Reinigungsarbeiten mit Hochdruckreinigern Wasser eintritt. Denn die mehrmaligen Umlenkungen der Strömungsrichtung bilden eine Art Schutzdichtung für das Innere des Bremszylindergehäuses. Wegen der mehrmaligen Strömungsumlenkungen zwischen den Lochblechen erster Art und zweiter Art ist auch eine kleine Bauhöhe der in dem Behälter übereinander gestapelten Lochbleche ausreichend, so dass eine wirksame Kondensation bei kleinem Bauraum möglich ist.

Weil die Lochbleche erster Art und die Lochbleche zweiter Art jeweils untereinander identisch sind, ergeben sich geringe Herstellkosten für den Kondensator.

Weiterhin besteht die Möglichkeit, die Anzahl der in dem Behälter übereinander gestapelten Lochbleche erster Art und zweier Art abhängig von dem in die sekundäre Kammer eingesaugten bzw. aus dieser verdrängten Luftvolumen zu wählen, so dass der erfindungsgemäße Kondensator für verschiedene Größen von sekundären Kammern flexibel verwendbar ist.

Nicht zuletzt ist eine beliebige gerade oder ungerade Anzahl von übereinander gestapelten Lochblechen erster Art und zweiter Art denkbar, beispielsweise kann von unten nach oben gesehen ein unterstes Lochblech ein Lochblech erster Art sein, dem sich nach oben hin ein Lochblech zweiter Art und dann wieder ein Lochblech erster Art anschließt. Auch können, aber müssen sich Lochbleche erster Art und Lochbleche zweiter Art nicht zwingend abwechselnd übereinander angeordnet sein. Es sind auch in direkter Hintereinanderfolge wenigstens zwei Lochbleche gleicher Art denkbar, welchen sich dann ein oder mehrere Lochbleche anderer Art anschließen.

Durch die in den Unteransprüchen aufgeführten Maßnahmen sind vorteilhafte Weiterbildungen und Verbesserungen der in den unabhängigen Ansprüchen angegebenen Erfindung möglich.

Besonders bevorzugt bilden die Lochbleche erster Art und die Lochbleche zweiter Art jeweils separate Bauteile, wobei sich am Behälter abstützende Druckfedermittel vorgesehen sind, durch deren Druckkräfte das wenigstens eine Lochblech erster Art gegen das wenigstens eine Lochblech zweiter Art vorgespannt ist. Weil die Druckfedermittel komprimierbar sind, kann die Höhe des Stapels aus Lochblechen erster Art und zweiter Art auf einfache Weise flexibel angepasst werden. Außerdem ist durch den Zusammenhalt der Lochbleche mittels der axialen Druckkräfte der Druckfedermittel keine zusätzliche Verbindung zwischen einem Lochblechen erster Art und einem Lochblech zweiter Art beispielsweise in Form einer Schweißnaht oder Verschraubung notwendig. Nicht zuletzt können die Druckfedermittel durch eine einfache Schraubenfeder gebildet werden.

Gemäß einer Weiterbildung dieser Ausführung sind die Druckfedermittel beispielsweise an einem kopfseitigen Deckel des topfförmigen Behälters abgestützt, wobei der Deckel an dem Behälter lösbar befestigt ist. Dann sind beispielsweise nach Lösen des Deckels vom Behälter die Lochbleche erster Art und zweiter Art aus dem Behälter einzeln entnehmbar wie auch die Druckfedermittel, um diese beispielsweise an die Höhe des gerade vorliegenden Stapels an Lochblechen erster Art und zweiter Art anzupassen.

Besonders bevorzugt ist der Behälter der Kondensationsvorrichtung ausgebildet, dass er an einen Boden des Bremszylinders angeflanscht werden kann. Dadurch ergibt sich eine kompakte Einheit und der Anschluss zur Verbindung mit der wenigstens einen sekundären Kammer des Bremszylinders kann beispielsweise direkt an einen korrespondierenden Anschluss des Gehäuses des Bremszylinders angeschlossen werden, der mit der wenigstens einen sekundäre Kammer in Verbindung steht.

Besonders bevorzugt ist in einem radial äußeren Zwischenraum zwischen einem Lochblech erster Art oder einem Lochblech zweiter Art und der radial inneren Umfangsfläche des Behälters wenigstens ein Dichtring angeordnet, der gegen die radial innere Umfangsfläche des Behälters dichtet. Damit werden Bypassströme des angesaugten bzw. verdrängten Luftstroms innerhalb der Kondensationsvorrichtung vermieden und gewährleistet, dass dieser Luftstrom im Wesentlichen vollständig die Lochbleche erster Art und zweiter Art passieren muss, um die darin enthaltene Feuchtigkeit auszukondensieren.

Zusätzlich können die radial äußeren Umfangsflächen der Lochbleche erster Art und der Lochbleche zweiter Art jeweils einen ein geringes Spiel aufweisenden Gleitsitz in Bezug zu der radial inneren Umfangsfläche des Behälters aufweisen, damit die Lochbleche erster Art und zweiter Art in den Behälter eingesetzt und auch wieder entnommen werden können.

Um eine möglichst geringe Bauhöhe des Behälters zu ermöglichen, kontaktieren sich die Lochbleche erster Art und die Lochbleche zweiter Art bevorzugt wenigstens abschnittsweise.

Besonders bevorzugt ist ein Lochblech erster Art als Topf mit im Querschnitt kegelförmig konkavem Boden und ein Lochblech zweiter Art als den Topf verschließender, im Querschnitt konkav kegelförmiger Deckel ausgebildet. Gemäß einer Weiterbildung weist das wenigstens eine Lochblech erster Art wenigstens eine radial äußere Durchgangsbohrung und das wenigstens eine Lochblech zweiter Art eine zentrale Durchgangsbohrung oder wenigstens eine radial innere Durchgangsbohrung auf. Auf diese Weise wird die oben bereits erwähnte Strömungsumlenkung zwischen radial innen und radial außen bzw. in umgekehrter Richtung realisiert.

Besonders bevorzugt weist der Behälter einen im Querschnitt gesehen kegelförmigen und konvexen Boden auf, an dem die Be- und Entlüftungsöffnung zentral ausgebildet ist. Damit wird ein axialer Raum zwischen dem Boden des Behälters und einem Lochblech erster Art oder zweiter Art als im Stapel unterstes Lochblech geschaffen.

Gemäß einer Weiterbildung kann in der Be- und Entlüftungsöffnung im Boden des Behälters eine Lochschraube mit einer den Innenraum des Behälters mit der Atmosphäre verbindenden Öffnung gehalten sein. Die Lochschraube weist beispielsweise im Schraubenkopf radiale Öffnungen auf, welche mit einer zentralen, in dem in die Be- und Entlüftungsöffnung eingeschraubten Schraubenschaft ausgebildeten axialen Bohrung verbunden sind. Durch die radialen Öffnungen wird in vorteilhafter Weise verhindert wird, dass Spritzwasser oder Schmutz direkt in die Be- und Entlüftungsöffnung eindringen kann.

Mit der oben beschriebenen bevorzugten Ausbildung der Kondensationsvorrichtung ergibt sich dann beispielsweise bei einem Einsaugen von Luft in die wenigstens eine sekundäre Kammer des Bremszylinders der folgende Strömungsverlauf:
Zunächst tritt die Luftströmung über die zentrale Be- und Entlüftungsöffnung bzw. die dort gehaltene Lochschraube in den axialen Raum zwischen dem Boden des Behälters und dem im Stapel untersten Lochblech, z.B. einem Lochblech erster Art ein. Danach wird die Luftströmung nach radial außen in die wenigstens eine radial äußere Durchgangsbohrung des Lochblechs erster Art umgelenkt. Dann erfolgt wiederum eine Umlenkung der Luftströmung nach radial innen zu der zentralen Durchgangsöffnung bzw. zu der wenigstens einen radial inneren Durchgangsöffnung eines sich dem Lochblech erster Art nach oben hin anschließenden Lochblechs zweiter Art hin. Nach Austritt der Luftströmung aus der zentralen Durchgangsöffnung bzw. der wenigstens einen radial inneren Durchgangsöffnung des Lochblechs zweiter Art gelangt diese beispielsweise in den axialen Raum zwischen dem Lochblech zweiter Art und einem beispielsweise sich diesem nach oben hin anschließenden Lochblech erster Art und wird dort wiederum nach radial außen gelenkt, um in die wenigstens eine Durchgangsöffnung des Lochblechs erster Art einzutreten. Die Luftführung durch die Lochbleche kann allerdings auch schon nach einem zweiten Lochblech im Stapel zu Ende sein.

Im Anschluss daran wiederholt sich die oben beschriebene, radial umlenkende Strömungsführung solange bis die Luftströmung am im Stapel obersten Lochblech angelangt ist und von dort in den Anschluss für die Verbindung zu der wenigstens einen sekundären Kammer strömt.

Während des Passierens der Lochbleche kondensiert die in der Luftströmung enthaltene Feuchtigkeit weitgehend an den Wänden der Lochbleche aus. Bei einem Verdrängen von Luftvolumen aus der wenigstens einen sekundären Kammer, beispielsweise durch eine Betätigung des pneumatischen Bremszylinders wird dann die auskondensierte Feuchtigkeit aus der Kondensationsvorrichtung über deren Be- und Entlüftungsöffnung in die Atmosphäre ausgeblasen. Die vertikale Stapelung der Lochbleche in der Gebrauchslage der Kondensationsvorrichtung mit einer zur Vertikalen parallelen Ausrichtung der Mittelachse des Behälters unterstützt außerdem ein schwerkraftbedingtes Ausfließen des Kondenswassers aus der Be- und Entlüftungsöffnung.

Gemäß einer besonders zu bevorzugenden Ausführungsform ist vorgesehen, dass
- in dem topfförmigen Behälter wenigstens zwei separate und identisch aufgebaute Kondensationsmodule koaxial zu einer Mittelachse des Behälters übereinander gestapelt angeordnet sind und ein Kondensationsmodul jeweils ein Lochblech erster Art und ein Lochblech zweiter Art beinhaltet, die senkrecht zur Mittelachse und parallel zueinander angeordnet sind, wobei
- die Lochbleche erster Art und die Lochbleche zweiter Art jeweils wenigstens eine Durchgangsbohrung aufweisen und die Durchgangsbohrungen der Lochbleche erster Art und der Lochbleche zweiter Art in Bezug zur Mittelachse des Behälters zueinander radial versetzt angeordnet sind, und wobei
- in Gebrauchslage des Behälters die Be- und Entlüftungsöffnung im Boden des Behälters und der Anschluss für die Verbindung zu der wenigstens einen sekundären Kammer in einem oberen Bereich des Behälters ausgebildet ist, und wobei
- die Kondensationsmodule in dem Behälter derart übereinander gestapelt sind, dass ein Kondensationsmodul mit einem Lochblech erster Art einem Lochblech zweiter Art des sich an das eine Kondensationsmodul anschließenden Kondensationsmoduls zumindest abschnittsweise mit Abstand derart gegenüberliegt, dass eine Strömungsverbindung zwischen den Durchgangsbohrungen der Lochbleche erster und zweiter Art verschiedener Kondensationsmodule zustande kommen kann, und wobei
- die mittels der Be- und Entlüftungsöffnung in den Behälter einströmende, auf ein Zuspannen oder Lösen des Bremszylinders zurückzuführende Druckluftströmung die Kondensationsmodule der Reihe nach von unten nach oben durchströmt und in den Anschluss für die Verbindung zu der wenigstens einen sekundären Kammer strömt bzw. die mittels des Anschlusses für die Verbindung zu dem wenigstens einen sekundären Kammer in den Behälter einströmende, auf ein Zuspannen oder Lösen des Bremszylinders zurückzuführende Druckluftströmung die Kondensationsmodule der Reihe nach von oben nach unten durchströmt und über die Be- und Entlüftungsöffnung in die Atmosphäre ausströmt.

Weil die Durchgangsöffnungen in den Lochblechen erster Art in Bezug zu den Durchgangsöffnungen in den Lochblechen zweiter Art radial versetzt sind, entsteht eine Strömungsumlenkung innerhalb eines Kondensationsmoduls und zwischen verschiedenen Kondensationsmodulen von radial innen nach radial außen bzw. von radial außen nach radial innen. Durch diese mehrmaligen Strömungsumlenkungen nach Art einer Labyrinthdichtung ergeben sich die oben bereits beschriebenen Drosseleffekte.

Wegen der labyrinthartigen Strömungsführung durch die Kondensationsmodule ist weiterhin die Gefahr geringer, dass bei Reinigungsarbeiten mit Hochdruckreinigern Wasser eintritt. Denn die mehrmaligen Umlenkungen der Strömungsrichtung bilden eine Art Schutzdichtung für das Innere des Bremszylindergehäuses. Wegen der mehrmaligen Strömungsumlenkungen innerhalb und zwischen den Kondensationsmoduln ist auch eine kleine Bauhöhe der in dem Behälter übereinander gestapelten Kondensationsmodule ausreichend, so dass eine wirksame Kondensation bei kleinem Bauraum möglich ist.

Weil die Kondensationsmodule standardisiert aufgebaut sind, d.h. sie sind identisch aus Lochblechen erster Art und Lochblechen zweiter Art aufgebaut, wobei auch die Lochbleche erster Art und die Lochbleche zweiter Art jeweils untereinander identisch sind, ergeben sich geringe Herstellkosten für den Kondensator.

Nicht zuletzt besteht die Möglichkeit, die Anzahl der in dem Behälter übereinander gestapelten Kondensationsmodule abhängig von dem in die sekundäre Kammer eingesaugten bzw. aus dieser verdrängten Luftvolumen zu wählen, so dass der erfindungsgemäße Kondensator für verschiedene Größen von sekundären Kammern flexibel verwendbar ist.

Besonders bevorzugt können sich die Lochbleche erster Art und zweiter Art von verschiedenen Kondensationsmodulen wenigstens in einem radial äußeren Bereich ringförmig kontaktieren und in einem zentralen Bereich voneinander axial beabstandet sein.

Mit der oben beschriebenen bevorzugten Ausbildung der Kondensationsvorrichtung ergibt sich dann beispielsweise bei einem Einsaugen von Luft in die wenigstens eine sekundäre Kammer des Bremszylinders der folgende Strömungsverlauf:
Zunächst tritt die Luftströmung über die zentrale Be- und Entlüftungsöffnung bzw. die dort gehaltene Lochschraube in den axialen Raum zwischen dem Boden des Behälters und dem Lochblech erster Art des im Stapel untersten Kondensationsmoduls ein. Danach wird die Luftströmung nach radial außen in die wenigstens eine radial äußere Durchgangsbohrung des Lochblechs erster Art umgelenkt. Dann erfolgt innerhalb des untersten Kondensationsmoduls wiederum eine Umlenkung der Luftströmung nach radial innen zu der zentralen Durchgangsöffnung bzw. zu der wenigstens einen radial inneren Durchgangsöffnung des Lochblechs zweiter Art des untersten Kondensationsmoduls hin. Nach Austritt der Luftströmung aus der zentralen Durchgangsöffnung bzw. der wenigstens einen radial inneren Durchgangsöffnung des Lochblechs zweiter Art des untersten Kondensationsmoduls gelangt diese in den axialen Raum zwischen dem untersten Kondensationsmodul und dem sich diesem anschließenden Kondensationsmodul, in welchem sie wiederum nach radial außen gelenkt wird, um in die wenigstens eine Durchgangsöffnung des Lochblechs erster Art des sich an das unterste Kondensationsmodul anschließenden Kondensationsmodul einzutreten. Im Anschluss daran wiederholt sich die oben beschriebene Strömungsführung solange bis die Luftströmung an der zentralen Durchgangsbohrung bzw. an der wenigstens einen radial inneren Durchgangsbohrung des Lochblechs zweiter Art des im Stapel obersten Kondensationsmoduls austritt und von dort in den Anschluss für die Verbindung zu der wenigstens einen sekundären Kammer gelangt.

Während des Passierens der Kondensationsmodule kondensiert die in der Luftströmung enthaltene Feuchtigkeit weitgehend an in den Kondensationsmodulen aus. Bei einem Verdrängen von Luftvolumen aus der wenigstens einen sekundären Kammer, beispielsweise durch eine Betätigung des pneumatischen Bremszylinders wird dann die auskondensierte Feuchtigkeit aus der Kondensationsvorrichtung über deren Be- und Entlüftungsöffnung in die Atmosphäre ausgeblasen. Die vertikale Stapelung der Kondensationsmodule in der Gebrauchslage der Kondensationsvorrichtung mit einer zur Vertikalen parallelen Ausrichtung der Mittelachse des Behälters unterstützt außerdem ein schwerkraftbedingtes Ausfließen des Kondenswassers aus der Be- und Entlüftungsöffnung.

Grundsätzlich kann es sich bei dem pneumatischen Bremszylinder, für den die oben beschriebene Kondensationsvorrichtung bestimmt ist, um jede Art von pneumatischem Bremszylinder handeln, bei welchem es durch Kolbenbewegungen zu einer Verdrängung von Luftvolumen in wenigstens einer von der Bremskammer abweichenden sekundären Kammer kommt.

Unter einer Bremskammer soll eine Kammer verstanden werden, deren Be- oder Entlüftung über den Bremskolben letztlich ein Zuspannen oder Lösen der Bremse bewirkt. Hingegen ist unter einer von der Bremskammer abweichenden sekundären Kammer eine Kammer zu verstehen ist, in welcher beim Lösen oder Zuspannen des Bremszylinders lediglich eine Verdrängung bzw. ein Ansaugen von Luftvolumen stattfindet, welche aber nicht unmittelbar zum Aufbringen der Bremskraft oder Bremslösekraft dient. Eine solche von der Bremskammer abweichende sekundäre Kammer ist insbesondere eine eine Rückholfeder für den Betriebsbremskolben eines aktiven pneumatischen Betriebsbremszylinders aufnehmende Kammer oder eine auf einen Federspeicherbremskolben wirkende Speicherfeder eines passiven pneumatischen Federspeicherbremszylinders aufnehmende Kammer.

Bei einem aktiven pneumatischen Betriebsbremszylinder ist daher in der sekundären Kammer die Rückholfeder angeordnet, um den Betriebsbremskolben in Lösestellung vorzuspannen, während die Betätigung des Betriebsbremskolbens über eine Be- und Entlüftung der Betriebsbremskammer erfolgt. Bei einem passiven pneumatischen Federspeicherbremszylinder werden indes die Bremskräfte durch wenigstens eine auf den Federspeicherbremskolben wirkende Speicherfeder aufgebracht, bei welchem es in einer die Speicherfeder enthaltenden sekundären Kammer durch Bewegungen des Federspeicherbremskolbens ebenfalls zu einer Verdrängung von Luftvolumen kommt.

Darüber hinaus kann es sich bei dem pneumatischen Bremszylinder auch um einen kombinierten Betriebsbrems- und Federspeicherbremszylinder handeln, bei dem die beiden oben genannten sekundären Kammern über die Kondensationsvorrichtung mit deren Be- und Entlüftungsöffnung verbunden sind. Somit können mit einer einzigen Kondensationsvorrichtung über deren Be- und Entlüftungsöffnung mehrere sekundäre Kammern be- und entlüftet bzw. von Verschmutzung und Feuchtigkeit weitgehend frei gehalten werden.

Nicht zuletzt kann der pneumatische Bremszylinder, insbesondere ein kombinierter Betriebsbrems- und Federspeicherbremszylinder mit einer Klotzbremseinheit einer Klotzbremse oder mit einer Bremszangeneinheit einer Scheibenbremse eines Schienenfahrzeugs verblockt sein. Die Anwendung der Kondensationsvorrichtung ist jedoch nicht auf pneumatische Bremszylinder von Schienenfahrzeugen beschränkt. Die erfindungsgemäße Kondensationsvorrichtung ist vielmehr für pneumatische Bremszylinder für jegliche Art von Fahrzeugen geeignet, insbesondere für Nutzfahrzeuge.

Besonders bevorzugt weist der Behälter der Kondensationsvorrichtung ein Volumen auf, welches im Wesentlichen dem Volumen an Luft entspricht, welches bei einem Kolbenhub des Bremskolbens aus der sekundären Kammer verdrängt bzw. in die sekundäre Kammer eingesaugt wird. Dann wird in die sekundäre Kammer nur das Luftvolumen beispielsweise beim Lösen des Bremszylinders eingesaugt, das zuvor beispielsweise beim Zuspannen des Bremszylinders aus der Kammer verdrängt wurde.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Identische bzw. gleich wirkende Bauteile und Baugruppen sind in unterschiedlichen Ausführungsformen jeweils mit denselben Bezugszahlen bezeichnet.

### Zeichnung

Nachstehend ist ein Ausführungsbeispiel der Erfindung in der Zeichnung dargestellt und in der nachfolgenden Beschreibung näher erläutert. In der Zeichnung zeigt
- Fig.1: eine teilweise Querschnittsdarstellung einer Klotzbremseinheit mit einer Kondensationsvorrichtung gemäß einer bevorzugten Ausführungsform der Erfindung;
- Fig.2: eine Querschnittsdarstellung der Kondensationsvorrichtung von Fig.1;
- Fig.3: eine perspektivische Explosionsquerschnittsdarstellung eines Kondensationsmoduls der Kondensationsvorrichtung von Fig.2.

### Beschreibung des Ausführungsbeispiels

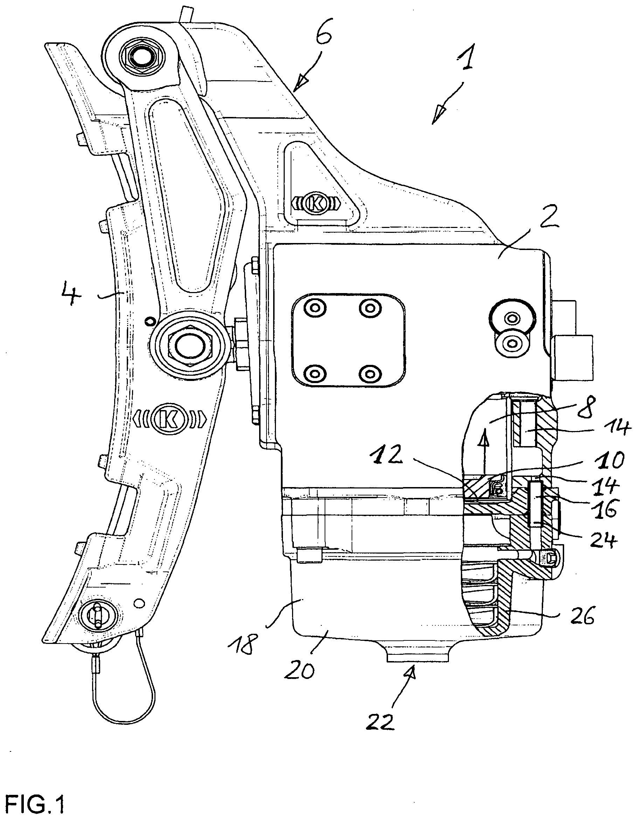

In Fig.1 ist eine Klotzbremseinheit 1 eines Schienenfahrzeugs dargestellt, welche integral in einem gemeinsamen Gehäuse 2 einen Krafterzeuger, bevorzugt in Form eines kombinierten Betriebsbrems- und Federspeicherbremszylinders sowie eine auf Bremsklötze 4 wirkende Bremsmechanik 6 beinhaltet. Von dem hinlänglich bekannten kombinierten Betriebsbrems- und Federspeicherbremszylinder interessiert hier lediglich eine Kammer 8, in welcher eine Rückholfeder eines Betriebsbremskolbens 10 des Betriebsbremszylinders angeordnet ist, wobei der Betriebsbremskolben 10 durch Be- und Entlüften einer Bremskammer 12 zum Zuspannen und Lösen der Betriebsbremse betätigt wird. In Fig.1 ist der Betriebsbremskolben 10 des Betriebsbremszylinders in Lösestellung gezeigt, wobei der dort gezeigte Pfeil in die Zuspannstellung weist.

Bei einer Betätigung des Betriebsbremskolbens 10 in Zuspannstellung (In Fig.1 durch den Pfeil symbolisiert) wird die in der Kammer 8 für die Rückholfeder befindliche Luft komprimiert. Um einen Druckausgleich in dieser Kammer 8 zu schaffen, ist diese über einen internen Strömungskanal 14 mit einem Anschluss 16 für eine Kondensationsvorrichtung 18 verbunden, an deren Boden 20 eine zentrale Be- und Entlüftungsöffnung 22 ausgebildet ist, über welche die Kammer 8 in noch zu beschreibender Weise mit der Atmosphäre in Strömungsverbindung steht.

Die Kondensationsvorrichtung 18 ist bevorzugt an das Gehäuse 2 der Klotzbremseinheit 1 bodenseitig angeflanscht, wobei sie mit der Klotzbremseinheit 1 verblockt ist. Die Kondensationsvorrichtung 18 dient zum Auskondensieren von Feuchtigkeit aus der in die Kammer 8 des Betriebsbremszylinders eingesaugten Luft. Weiterhin soll sie auch ein Eindringen von Schmutzpartikeln in die Kammer 8 verhindern. Sie weist einen Anschluss 24 für eine Verbindung zu der Kammer 8 des Betriebsbremszylinders auf, der in Bezug zum korrespondierenden, als Mündung des Strömungskanals 14 ausgebildeten Anschluss 16 koaxial angeordnet ist. Die Anschlüsse 16, 24 sowie der Strömungskanal 14 verlaufen in Gebrauchslage der Klotzbremseinheit 1 bzw. der Kondensationsvorrichtung 18 beispielweise vertikal. Damit steht der Anschluss 24 der Kondensationsvorrichtung 18 mit der die Rückholfeder aufnehmenden Kammer 8 des Betriebsbremszylinders in Strömungsverbindung.

Zusätzlich kann der in Fig.1 dargestellte Strömungskanal 14 im Gehäuse 2 der Klotzbremseinheit 1 mit einer hier nicht gezeigten Kammer des Federspeicherbremszylinders verbunden sein, in der wenigstens eine auf einen Federspeicherkolben wirkende Speicherfeder untergebracht ist, und bei der die in ihr befindliche Luft beim Zuspannen und Lösen der Federspeicherbremse bzw. Park- oder Haltebremse ebenfalls expandiert bzw. komprimiert wird. Dann steht auch diese hier nicht gezeigte Kammer über die Be- und Entlüftungsöffnung 22 der Kondensationsvorrichtung 18 mit der Atmosphäre in Verbindung.

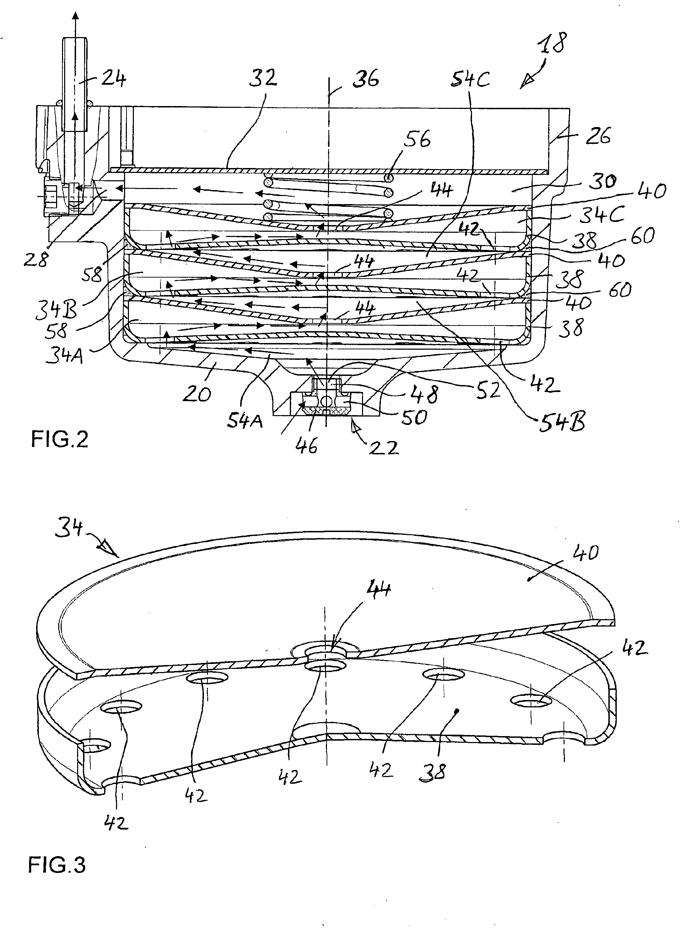

Wie aus Fig.2 hervorgeht, weist die Kondensationsvorrichtung 18 einen topfförmigen Behälter 26 auf, der an die Klotzbremseinheit 1 bodenseitig angeflanscht und in dem der Anschluss 24 als bevorzugt vertikaler Kanal ausgebildet ist. Der Anschluss 24 mündet dann in eine hier beispielsweise radiale Öffnung 28 zum Innenraum 30 des Behälters 26, der kopfseitig durch einen Deckel 32 verschlossen ist. Die beispielsweise radiale Öffnung 28 zur Verbindung mit dem Anschluss 24 ist am Behälter 26 kopfseitig, insbesondere an dessen oberem Rand ausgebildet.

In dem topfförmigen Behälter 26 sind beispielsweise drei separate und standardisiert aufgebaute und zylindrische Kondensationsmodule 34A, 34B und 34C koaxial zu einer Mittelachse 36 des ebenfalls bevorzugt zylindrischen Behälters 26 übereinander gestapelt angeordnet. Ein solches Kondensationsmodul 34A, 34B, 34C besteht bevorzugt jeweils lediglich aus einem Lochblech erster Art 38 und einem Lochblech zweiter Art 40, die jeweils senkrecht zur Mittelachse 36 und parallel zueinander in dem Behälter 26 angeordnet sind, wie Fig.3 zeigt.

Die Lochbleche erster Art 38 und die Lochbleche zweiter Art 40 eines jeden Kondensationsmoduls 34A, 34B, 34C weisen jeweils wenigstens eine Durchgangsbohrung 42, 44 auf, wobei die Durchgangsbohrungen 42, 44 der Lochbleche erster Art 38 und der Lochbleche zweiter Art 40 in Bezug zur Mittelachse 36 des Behälters 26 radial versetzt zueinander angeordnet sind. Besonders bevorzugt weisen die Lochbleche erster Art 38 mehrere radial äußere Durchgangsbohrungen 42 und die Lochbleche zweiter Art 40 eine zentrale Durchgangsbohrung 42 auf, wie Figuren 2 und 3 zeigen.

In Gebrauchslage des Behälters 26 bzw. der Kondensationsvorrichtung 18 bzw. der damit verblockten Klotzbremseinheit 1 gesehen ist die Be- und Entlüftungsöffnung 22 im Boden 20 des Behälters 26 zentral ausgebildet. In diese Be- und Entlüftungsöffnung 22 ist beispielsweise eine Lochschraube 46 mit einer den Innenraum 30 des Behälters 26 mit der Atmosphäre verbindenden Öffnung gehalten, insbesondere dadurch, dass ein Schraubenschaft 48 der Lochschraube 46 in ein Gewinde der Be- und Entlüftungsöffnung 22 eingeschraubt ist und die Lochschraube 46 beispielsweise im Schraubenkopf radiale Öffnungen 50 aufweist, welche mit der Atmosphäre und mit einer zentralen, in dem Schraubenschaft 48 ausgebildeten axialen Bohrung 52 in Verbindung stehen, die wiederum in den Innenraum 30 des Behälters 26 mündet.

Wie Fig.2 zeigt, sind die Kondensationsmodule 34A, 34B, 34C in dem Behälter 26 derart übereinander gestapelt sind, dass ein Kondensationsmodul 34C, 34B mit einem Lochblech erster Art 38 einem Lochblech zweiter Art 40 des sich an das eine Kondensationsmodul 34C, 34B anschließenden Kondensationsmoduls 34B, 34A zumindest abschnittsweise mit Abstand derart gegenüberliegt, dass eine Strömungsverbindung zwischen den Durchgangsbohrungen 42, 44 der Lochbleche erster und zweiter Art 38, 40 verschiedener Kondensationsmodule 34A, 34B, 34C zustande kommen kann.

Besonders bevorzugt ist ein Lochblech erster Art 38 topfartig mit im Querschnitt kegelförmig konkavem Boden, der dann die radial äußeren Durchgangsbohrungen 42 aufweist, und mit einer umlaufenden, zylindrischen Umfangswand ausgebildet (Fig.3). Ein Lochblech zweiter Art 40 stellt indes bevorzugt einen das topfförmige Lochblech erster Art 38 verschließenden, im Querschnitt konkav kegelförmigen Deckel dar, in dem dann die zentrale Durchgangsbohrung 44 ausgebildet ist. Dieser Deckel als Lochblech erster Art 38 liegt dann mit seinem radial äußeren Rand bevorzugt auf dem freien senkrechten Rand der zylindrischen Umfangswand des Lochblechs erster Art 38 bündig und dichtend auf. Damit sind die Lochbleche erster Art 38 bei einem Kondensationsmodul 34A, 34B, 34C bevorzugt unten und die Lochbleche zweiter Art 40 bevorzugt oben angeordnet, gesehen in Gebrauchslage.

Die Lochbleche erster Art und zweiter Art 38, 40 stellen bevorzugt Tiefziehteile aus Stahlblech dar. Besonders bevorzugt ist der Boden des 20 des Behälters 26 im Querschnitt gesehen kegelförmig und konvex, an dessen prominentem Zentrum die Be- und Entlüftungsöffnung 22 ausgebildet ist (Fig.2). Durch die oben beschriebene Geometrie wird ein freier axialer Raum 54A zwischen dem Boden 20 des Behälters 26 und einem Lochblech erster Art 38 des im Stapel untersten Kondensationsmoduls 34A geschaffen.

Besonders bevorzugt bilden die Lochbleche erster Art 38 und die Lochbleche zweiter Art 40 jeweils separate Bauteile, wobei eine sich am Deckel 32 des Behälters 26 abstützende Schraubendruckfeder 56 vorgesehen ist, durch deren Druckkräfte einerseits bei jedem Kondensationsmodul 34A, 34B, 34C dessen Lochblech zweiter Art 40 als Deckel gegen sein Lochblech erster Art als Topf und andererseits die Kondensationsmodule 34A, 34B, 34C gegeneinander vorgespannt sind, wie anhand von Fig.2 leicht vorstellbar ist.

Der Deckel 32 ist an dem Behälter 26 lösbar befestigt. Dann sind nach Lösen des Deckels 32 vom Behälter 26 die Schraubendruckfeder 56 und die Kondensationsmodule 34A, 34B, 34C bzw. deren Lochbleche erster Art 38 und zweiter Art 40 aus dem Behälter einzeln 26 entnehmbar.

Besonders bevorzugt sind in radial äußeren Zwischenräumen 58 zwischen einem Lochblech erster Art 38 eines Kondensationsmoduls 34A, 34B, 34C und einem Lochblech zweiter Art 40 eines an den Kondensationsmodul 34A, 34B, 34C anschließenden Kondensationsmoduls 34A, 34B, 34C Dichtringe 60 angeordnet, der gegen die radial innere Umfangsfläche des Behälters 26 dichtet. Zusätzlich weisen die radial äußeren Umfangsflächen der zylindrischen Umfangswände der Lochbleche erster Art 38 einen ein geringes Spiel aufweisenden Gleitsitz in Bezug zur radial inneren Umfangsfläche des Behälters 26 auf, damit die Kondensationsmodule 34A, 34B, 34C bzw. deren Lochbleche erster Art 38 und zweiter Art 40 von oben her in den Behälter 26 eingestapelt werden können.

Die übereinander gestapelten Kondensationsmodule 34A, 34B, 34C bzw. die Lochbleche erster Art 38 und zweiter Art 40 von verschiedenen Kondensationsmoduln 34A, 34B, 34C kontaktieren sich bevorzugt in einem radial äußeren Abschnitt der Lochbleche 38, 40 ringförmig und sind in einem zentralen Bereich durch jeweils einen axialen Raum 54B, 54C voneinander axial beabstandet, wie Fig.2 zeigt. Um dies zu ermöglichen, sind die Lochbleche erster Art 38 und zweiter Art 40 entsprechend geformt bzw. tiefgezogen.

Mit der oben beschriebenen bevorzugten Ausbildung der Kondensationsvorrichtung 18 ergibt sich dann beispielsweise bei einem Einsaugen von Luft in die Kammer 8 des Betriebsbremszylinders durch Verbringen des Betriebsbremskolbens 10 von der Zuspannstellung in die Lösestellung, wobei sich das Volumen der Kammer 8 vergrößert, der im Folgenden beschriebene Strömungsverlauf durch die Kondensationsvorrichtung 18, der in Fig.2 durch Pfeile veranschaulicht wird:
Zunächst tritt die Luftströmung über die zentrale Be- und Entlüftungsöffnung 22 bzw. die dort gehaltene Lochschraube 46 in den axialen Raum 54A zwischen dem Boden 20 des Behälters 26 und dem Lochblech erster Art 38 des im Stapel untersten Kondensationsmoduls 34A ein. Danach wird die Luftströmung nach radial außen in die radial äußeren Durchgangsbohrungen 42 des Lochblechs erster Art 38 des untersten Kondensationsmoduls 34A umgelenkt. Dann erfolgt innerhalb des untersten Kondensationsmoduls 34A wiederum eine Umlenkung der Luftströmung nach radial innen zu der zentralen Durchgangsöffnung 44 des Lochblechs zweiter Art 40 des untersten Kondensationsmoduls 34A hin.

Nach Austritt der Luftströmung aus der zentralen Durchgangsöffnung 44 des Lochblechs zweiter Art 40 des untersten Kondensationsmoduls 34A gelangt diese in den freien axialen Raum 54B zwischen dem untersten Kondensationsmodul 34A und dem sich diesem anschließenden mittleren Kondensationsmodul 34B, in welchem sie wiederum nach radial außen gelenkt wird, um in die radial äußeren Durchgangsöffnungen 42 des Lochblechs erster Art 38 des mittleren Kondensationsmodul 34B einzutreten. Im Anschluss daran wiederholt sich die oben beschriebene Strömungsführung innerhalb der Kondensationsmodule 34B und 34C solange, bis die Luftströmung an der zentralen Durchgangsbohrung 44 des Lochblechs zweiter Art 40 des im Stapel obersten Kondensationsmoduls 34C austritt und von dort über die radiale Öffnung 28, den Anschluss 24 der Kondensationsvorrichtung 18, den Anschluss 16 der Klotzbremseinheit 1 und den Strömungskanal 14 in die Kammer 8 des Betriebsbremszylinders gelangt.

Während des Passierens der Kondensationsmodule 34A, 34B, 34C kondensiert die in der Luftströmung enthaltene Feuchtigkeit weitgehend an den Lochblechen erster und zweiter Art 38, 40 aus und schlägt sich an deren Wänden nieder.

Bei einem Verdrängen von Luftvolumen aus der Kammer 8, hier hervorgerufen durch das Zuspannen des pneumatischen Betriebsbremszylinders und die dadurch hervorgerufene Verkleinerung des Volumens der Kammer 8 wird dann eine Luftströmung genau entgegen gesetzt zu dem oben beschriebenen Strömungsweg erzeugt, durch welchen die an den Wänden der Lochbleche erster Art 38 und zweiter Art 40 niedergeschlagenen Feuchtigkeitströpfchen aus der Kondensationsvorrichtung 18 über deren Be- und Entlüftungsöffnung 22 in die Atmosphäre ausgeblasen werden. Die vertikale Stapelung der Kondensationsmodule 34A, 34B, 34C in der Gebrauchslage der Kondensationsvorrichtung 18 mit einer zur Vertikalen parallelen Ausrichtung der Mittelachse 36 des Behälters 26 unterstützt außerdem ein schwerkraftbedingtes Ausfließen des Kondenswassers aus der Be- und Entlüftungsöffnung 22.

Anstatt zylindrisch könnten der Behälter 26, die Lochbleche erster Art 38 und zweiter Art 40 im Querschnitt auch rechteckig, quadratisch oder polygonförmig ausgebildet sein, ohne dass hierdurch die Funktion der Kondensationsvorrichtung 18 beeinträchtigt wird.

### Bezugszeichenliste

- 1: Klotzbremseinheit
- 2: Gehäuse
- 4: Bremsklötze
- 6: Bremsmechanik
- 8: Kammer
- 10: Betriebsbremskolben
- 12: Bremskammer
- 14: Strömungskanal
- 16: Anschluss
- 18: Kondensationsvorrichtung
- 20: Boden
- 22: Be- und Entlüftungsöffnung
- 24: Anschluss
- 26: Behälter
- 28: Öffnung
- 30: Innenraum
- 32: Deckel
- 34: Kondensationsmodule
- 36: Mittelachse
- 38: Lochblech erster Art
- 40: Lochblech zweiter Art
- 42: radial äußere Durchgangsbohrungen
- 44: zentrale Durchgangsbohrung
- 46: Lochschraube
- 48: Schraubenschaft
- 50: Öffnungen
- 52: axiale Bohrung
- 54: axialer Raum
- 56: Schraubendruckfeder
- 58: radial äußerer Zwischenraum
- 60: Dichtring

## Patentansprüche

1. Kondensationsvorrichtung (18) für pneumatische Bremszylinder von Fahrzeugbremsanlagen, wenigstens zum Auskondensieren von Feuchtigkeit aus der in eine sekundäre Kammer (8) des Bremszylinders eingesaugten oder aus der sekundären Kammer (8) verdrängten Luft, mit einem Anschluss (24) für eine Verbindung zu der wenigstens einen sekundären Kammer (8) des Bremszylinders, einer einerseits mit der Atmosphäre und andererseits mit dem Anschluss (24) in Strömungsverbindung stehenden Be- und Entlüftungsöffnung (22) sowie mit einem topfförmigen Behälter (26), **dadurch gekennzeichnet, dass**
a) in dem topfförmigen Behälter (26) wenigstens zwei koaxial zu einer Mittelachse (36) des Behälters (26) und parallel übereinander gestapelte Lochbleche (38, 40) angeordnet sind, von welchen wenigstens ein Lochblech ein Lochblech erster Art (38) und wenigstens ein Lochblech ein Lochblech zweiter Art (40) ist, wobei
b) ein Lochblech erster Art (38) und ein Lochblech zweiter Art (40) jeweils wenigstens eine Durchgangsbohrung (42, 44) aufweisen und die wenigstens eine Durchgangsbohrung (42) eines Lochblechs erster Art (38) gegenüber der wenigstens einen Durchgangsbohrung (44) eines Lochblechs zweiter Art (40) in Bezug zur Mittelachse (36) des Behälters (26) radial versetzt angeordnet ist, und wobei
c) in Gebrauchslage des Behälters (26) die Be- und Entlüftungsöffnung (22) in einem Boden (20) des Behälters (26) und ein Anschluss (24) für die Verbindung zu der wenigstens einen sekundären Kammer (8) in einem oberen Bereich des Behälters (26) ausgebildet ist, und wobei
d) die Lochbleche erster Art und zweiter Art (38, 40) in dem Behälter (26) derart übereinander gestapelt sind, dass ein Lochblech erster Art (38) einem Lochblech zweiter Art (40) zumindest abschnittsweise mit Abstand derart gegenüberliegt, dass eine Strömungsverbindung zwischen der wenigstens einen Durchgangsbohrung (42) eines Lochblechs erster Art (38) und der wenigstens einen Durchgangsbohrung (44) eines Lochblechs zweiter Art (40) zustande kommen kann, und wobei
e) die mittels der Be- und Entlüftungsöffnung (22) in den Behälter (26) einströmende, auf ein Zuspannen oder Lösen des Bremszylinders zurückzuführende Druckluftströmung die Lochbleche (38, 40) der Reihe nach von unten nach oben durchströmt und in den Anschluss (24) für die Verbindung zu der wenigstens einen sekundären Kammer (8) strömt oder die mittels des Anschlusses (24) für die Verbindung zu der wenigstens einen sekundären Kammer (8) in den Behälter (26) einströmende, auf ein Zuspannen oder Lösen des Bremszylinders zurückzuführende Druckluftströmung die Lochbleche (38, 40) der Reihe nach von oben nach unten durchströmt und über die Be- und Entlüftungsöffnung (22) in die Atmosphäre ausströmt.

2. Kondensationsvorrichtung nach Anspruch 1, **dadurch gekennzeichnet, dass** ein Lochblech erster Art (38) und ein Lochblech zweiter Art (40) jeweils separate Bauteile bilden, wobei sich am Behälter (26) abstützende Druckfedermittel (56) vorgesehen sind, durch deren Druckkräfte das wenigstens eine Lochblech erster Art (38) gegen das wenigstens eine Lochblech zweiter Art (40) vorgespannt ist.

3. Kondensationsvorrichtung nach Anspruch 2, **dadurch gekennzeichnet, dass** die Druckfedermittel (56) an einem kopfseitigen Deckel (32) des topfförmigen Behälters (26) abgestützt sind.

4. Kondensationsvorrichtung nach Anspruch 3, **dadurch gekennzeichnet, dass** der Deckel (32) an dem Behälter (26) lösbar befestigt ist, wobei nach Lösen des Deckels (32) vom Behälter (26) das wenigstens eine Lochblech erster Art (38) und das wenigstens eine Lochblech zweiter Art (40) aus dem Behälter (26) einzeln entnehmbar sind.

5. Kondensationsvorrichtung nach einem der vorhergehenden Ansprüche, **dadurch gekennzeichnet, dass** der Behälter (26) zum Anflanschen an einen Boden des Bremszylinders ausgebildet ist.

6. Kondensationsvorrichtung nach einem der vorhergehenden Ansprüche, **dadurch gekennzeichnet, dass** in einem radial äußeren Zwischenraum (58) zwischen einem Lochblech erster Art (38) oder einem Lochblech zweiter Art (40) und der radial inneren Umfangsfläche des Behälters (26) wenigstens ein Dichtring (60) angeordnet ist.

7. Kondensationsvorrichtung nach einem der vorhergehenden Ansprüche, **dadurch gekennzeichnet, dass** sich das wenigstens eine Lochblech erster Art (38) und das wenigstens eine Lochblech zweier Art (40) wenigstens abschnittsweise kontaktieren.

8. Kondensationsvorrichtung nach einem der vorhergehenden Ansprüche, **dadurch gekennzeichnet,** das ein Lochblech erster Art (38) topfförmig mit im Querschnitt kegelförmig konkavem Boden und ein Lochblech zweiter Art (40) als das topfförmige Lochblech erster Art (38) verschließender, im Querschnitt konkav kegelförmiger Deckel ausgebildet ist.

9. Kondensationsvorrichtung nach einem der vorhergehenden Ansprüche, **dadurch gekennzeichnet, dass**
a) in dem topfförmigen Behälter (26) wenigstens zwei separate und identisch aufgebaute Kondensationsmodule (34A, 34B, 34C) koaxial zu einer Mittelachse (36) des Behälters (26) übereinander gestapelt angeordnet sind und ein Kondensationsmodul (34A, 34B; 34C) jeweils ein Lochblech erster Art (38) und ein Lochblech zweiter Art (40) beinhaltet, die senkrecht zur Mittelachse (36) und parallel zueinander angeordnet sind, wobei
b) die Kondensationsmodule (34A, 34B, 34C) in dem Behälter (26) derart übereinander gestapelt sind, dass ein Kondensationsmodul (34A, 34B, 34C) mit einem Lochblech erster Art (38) einem Lochblech zweiter Art (40) des sich an das eine Kondensationsmodul (34A, 34B, 34C) anschließenden Kondensationsmoduls (34A, 34B, 34C) zumindest abschnittsweise mit Abstand derart gegenüberliegt, dass eine Strömungsverbindung zwischen den Durchgangsbohrungen (42, 44) der Lochbleche erster und zweiter Art (38, 40) verschiedener Kondensationsmodule (34A, 34B, 34C) zustande kommen kann, und wobei
c) die mittels der Be- und Entlüftungsöffnung (22) in den Behälter (26) einströmende, auf ein Zuspannen oder Lösen des Bremszylinders zurückzuführende Druckluftströmung die Kondensationsmodule (34A, 34B, 34C) der Reihe nach von unten nach oben durchströmt und in den Anschluss (24) für die Verbindung zu der wenigstens einen sekundären Kammer (8) strömt oder die mittels des Anschlusses (24) für die Verbindung zu der wenigstens einen sekundären Kammer (8) in den Behälter (26) einströmende, auf ein Zuspannen oder Lösen des Bremszylinders zurückzuführende Druckluftströmung die Kondensationsmodule (34A, 34B, 34C) der Reihe nach von oben nach unten durchströmt und über die Be- und Entlüftungsöffnung (22) in die Atmosphäre ausströmt.

10. Kondensationsvorrichtung nach Anspruch 9, **dadurch gekennzeichnet, dass** sich die Lochbleche erster Art und zweiter Art (38, 40) von verschiedenen Kondensationsmodulen (34A, 34B, 34C) wenigstens in einem radial äußeren Bereich ringförmig kontaktieren und in einem zentralen Bereich voneinander axial beabstandet sind.

11. Kondensationsvorrichtung nach einem der vorhergehenden Ansprüche, **dadurch gekennzeichnet, dass** das wenigstens eine Lochblech erster Art (38) wenigstens eine radial äußere Durchgangsbohrung (42) und das wenigstens eine Lochblech zweiter Art (40) eine zentrale Durchgangsbohrung (44) oder wenigstens eine radial innere Durchgangsbohrung aufweist.

12. Kondensationsvorrichtung nach einem der vorhergehenden Ansprüche, **dadurch gekennzeichnet, dass** der Behälter (26) einen im Querschnitt gesehen kegelförmigen und konvexen Boden (20) aufweist, an dem die Be- und Entlüftungsöffnung (22) zentral ausgebildet ist.

13. Kondensationsvorrichtung nach Anspruch 12, **dadurch gekennzeichnet, dass** in der Be- und Entlüftungsöffnung (22) im Boden (20) des Behälters (26) eine Lochschraube (46) mit wenigstens einer den Innenraum (30) des Behälters (26) mit der Atmosphäre verbindenden Öffnung (50, 52) gehalten ist.

14. Pneumatischer Bremszylinder für Bremsanlagen von Fahrzeugen, mit einem im Bremszylindergehäuse (2) angeordneten Bremskolben (10), der durch Be- und Entlüften einer Bremskammer (12) in Löse- oder Zuspannstellung bringbar ist, wobei sich das Volumen wenigstens einer von der Bremskammer (12) abweichenden sekundären Kammer (8) aufgrund des Zuspannens oder Lösens des Bremszylinders verkleinert oder vergrößert und eine die wenigstens eine sekundäre Kammer (8) mit der Atmosphäre verbindende Be- und Entlüftungsöffnung (22) vorgesehen ist, wobei die wenigstens eine sekundäre Kammer (8) mit der Be- und Entlüftungsöffnung (22) durch eine Kondensationsvorrichtung (18) nach einem der vorhergehenden Ansprüche verbunden ist.

15. Bremszylinder nach Anspruch 14, **dadurch gekennzeichnet, dass** der Behälter (26) ein Volumen aufweist, welches im Wesentlichen dem Volumen an Luft entspricht, welches bei einem Kolbenhub des Bremskolbens (10) aus der sekundären Kammer (8) verdrängt bzw. in die sekundäre Kammer eingesaugt wird.

16. Bremszylinder nach Anspruch 14 oder 15, **dadurch gekennzeichnet, dass** er ein pneumatischer Betriebsbremszylinder ist und die sekundäre Kammer (8) eine einen Betriebsbremskolben (10) in Lösestellung vorspannende Rückholfeder aufnimmt.

17. Bremszylinder nach Anspruch 14 oder 15, **dadurch gekennzeichnet, dass** er ein pneumatischer Federspeicherbremszylinder und die sekundäre Kammer eine Federkammer zur Aufnahme wenigstens einer einen Federspeicherbremskolben betätigende Speicherfeder ist.

18. Bremszylinder nach Anspruch 16 und 17, **dadurch gekennzeichnet, dass** er ein kombinierter Betriebsbrems- und Federspeicherbremszylinder ist.

## Claims

1. Condensation device (18) for pneumatic brake cylinders of vehicle brake systems, at least for condensing out moisture from the air drawn into or expelled from a secondary chamber (8) of the brake cylinder, with a connection for connecting to the at least one secondary chamber (8) of the brake cylinder, an air inlet and discharge opening (22) in flow connection on the one hand with the atmosphere and on the other hand with the said connection (24), and with a pot-shaped container (26), **characterised in that**
a) in the pot-shaped container (26) there are arranged at least two perforated sheets (38, 40) which are coaxial relative to a central axis (36) of the container (26) and are stacked parallel to one another one above the other, at least one perforated sheet being a perforated sheet (38) of a first type and at least one perforated sheet being a perforated sheet (40) of a second type, wherein
b) a perforated sheet (38) of the first type and a perforated sheet (40) of the second type each have at least one through-hole (42, 44) and the at least one through-hole (42) of a perforated sheet (38) of the first type is arranged radially offset relative to the central axis (36) compared with the at least one through-hole (44) of a perforated sheet (40) of the second type, and wherein
c) in the service position of the container (26) the air inlet and discharge opening (22) is formed in a bottom (20) of the container (26) and a connection (24) for connecting to the at least one secondary chamber (8) is formed in an upper area of the container (26), and wherein
d) the perforated sheets of the first and second types (38, 40) are stacked one above another in the container (26) in such manner that a perforated sheet (38) of the first type overlaps a perforated sheet (40) of the second type, at least partially and opposite one another a distance apart, so that a flow connection can form between the at least one through-hole (42) of a perforated sheet (38) of the first type and the at least one through-hole of a perforated sheet (40) of the second type, and wherein
e) the compressed air flowing through the inlet and discharge opening (22) into the container (26) owing to an application or release of the brake cylinder, flows through the series of perforated sheets (38, 40) from bottom to top and into the connection (24) for connecting to the at least one secondary chamber (8), or flowing through the connection (24) for connecting to the at least one secondary chamber (8) into the container (26) owing to an application or release of the brake cylinder, flows through the series of perforated sheets (38, 40) from top to bottom and out to the atmosphere through the inlet and discharge opening (22).

2. Condensation device according to Claim 1, **characterised in that**
a perforated sheet of the first type (38) and a perforated sheet of the second type (40) form in each case separate components, and compression spring means (56) supported on the container (26) are provided, due to the pressure forces of which the at least one perforated sheet (38) of the first type is prestressed against the at least one perforated sheet (40) of the second type.

3. Condensation device according to Claim 2, **characterised in that**
the compression spring means (56) are supported against a cover (32) on the head side of the pot-shaped container (26).

4. Condensation device according to Claim 3, **characterised in that**
the cover (32) is fastened to and can be released from the container (26), and after releasing the cover (22) from the container (26) the at least one perforated sheet (38) of the first type and the at least one perforated sheet (40) of the second type can be removed individually from the container (26).

5. Condensation device according to any of the preceding claims, **characterised in that**
the container (26) is designed to be flanged to a base of the brake cylinder.

6. Condensation device according to any of the preceding claims, **characterised in that**
in a radially outer intermediate space (58) between a perforated sheet of the first type (38) or a perforated sheet of the second type (40), and the radially inner circumferential surface of the container (26), there is arranged at least one sealing ring (60).

7. Condensation device according to any of the preceding claims, **characterised in that**
the at least one perforated sheet (38) of the first type and the at least one perforated sheet (40) of the second type are in contact, at least partially.

8. Condensation device according to any of the preceding claims, **characterised in that** viewed in cross-section, a perforated sheet (38) of the first type is pot-shaped with a conical, concave bottom, and a perforated sheet (40) of the second type has a conical, concave cross-section shape which covers the perforated sheet (38) of the first type.

9. Condensation device according to any of the preceding claims, **characterised in that**
a) in the pot-shaped container (26) at least two separate and identically formed condensation modules (34A, 34B, 34C) are arranged, stacked one above another coaxially relative to a central axis (36) of the container (26), and each condensation module (34A, 34B, 34C) comprises a perforated sheet (38) of the first type and a perforated sheet (40) of the second type, which are arranged perpendicularly to the central axis (36) and parallel to one another, wherein
b) the condensation modules (34A, 34B, 34C) in the container (26) are stacked over one another in such manner that one condensation module (34A, 34B, 34C) with a perforated sheet of the first type (38) is opposite a perforated sheet of the second type (40) which is part of a condensation module (34A, 34B, 34C) adjacent to the said one condensation module (34A, 34B, 34C), at least in part and a distance away therefrom, in such manner that a flow connection between the through-holes (42, 44) of the perforated sheets of the first and second type (38, 40), of different condensation modules (34A, 34B, 34C), can form, and wherein
c) the compressed air flowing through the inlet and discharge opening (22) into the container (26) owing to an application or release of the brake cylinder, flows through the series of condensation modules (34A, 34B, 34C) from bottom to top and into the connection (24) for connecting to the at least one secondary chamber (8), or flowing through the connection (24) for connecting to the at least one secondary chamber (8), into the container (26) owing to an application or release of the brake cylinder, flows through the series of condensation modules (34A, 34B, 34C) from top to bottom and out to the atmosphere through the inlet and discharge opening (22).

10. Condensation device according to Claim 9, **characterised in that**
the perforated sheets (38, 40) of the first and second type which are part of different condensation modules (34A, 34B, 34C) are in contact along a ring at least in a radially outer area, and are axially a distance apart from one another in a central area.

11. Condensation device according to any of the preceding claims, **characterised in that**
the at least one perforated sheet (38) of the first type has at least one radially outer through-hole (42) and the at least one perforated sheet (40) of the second type has a central through-hole (44) or at least one radially inner through-hole.

12. Condensation device according to any of the preceding claims, **characterised in that**
the container (26), viewed in cross-section, has a conical and convex bottom (20) in which the air inlet and discharge opening (22) is formed centrally.

13. Condensation device according to Claim 12, **characterised in that**
a perforated screw (46) with at least one opening (50, 52) that connects the inside space (30) of the container (26) to the atmosphere is held in the air inlet and discharge opening (22) in the bottom (20) of the container (26).

14. Pneumatic brake cylinder for vehicle brake systems, with a brake piston (10) arranged in the brake cylinder housing (2), which piston can be moved to a release or application position by admitting air into and discharging it from a brake chamber (12), wherein the volume of at least one secondary chamber (8) which differs from the brake chamber (12) decreases or increases due to the application or release of the brake cylinder, and an air inlet and discharge opening (22) that connects the said secondary chamber (8) to the atmosphere is provided, such that the at least one secondary chamber (8) is connected to the air inlet and discharge opening (22) by way of a condensation device (18) according to any of the preceding claims.

15. Brake cylinder according to Claim 14, **characterised in that**
the container (26) has a volume that essentially corresponds to the volume of air which, by a piston stroke of the brake piston (10), is expelled from or drawn into the secondary chamber (8).

16. Brake cylinder according to Claims 14 or 15, **characterised in that**
it is a pneumatic service brake cylinder and the secondary chamber (8) accommodates a restoring spring that prestresses a service brake piston (10) into the release position.

17. Brake cylinder according to Claims 14 or 15, **characterised in that**
it is a pneumatic spring brake cylinder and the secondary chamber is a spring chamber for accommodating at least one spring that actuates a spring brake piston.

18. Brake cylinder according to Claims 16 and 17, **characterised in that**
it is a combined service brake and spring brake cylinder.

## Revendications

1. Dispositif (18) de condensation de cylindres de frein pneumatiques de systèmes de frein de véhicule, au moins pour condenser de l'humidité de l'air aspiré dans une chambre (8) secondaire du cylindre de frein ou refoulé de la chambre (8) secondaire, comprenant un raccord (24) pour une communication avec la au moins une chambre (8) secondaire du cylindre de frein, une ouverture (22) d'alimentation en air et de purge, en communication fluidique d'une part avec l'atmosphère et d'autre part avec le raccord (24), ainsi qu'un récipient (26) en forme de pot, **caractérisé en ce que**
a) dans le récipient (26) en forme de pot sont disposées au moins deux tôles (38, 40) perforées, empilées les unes sur les autres parallèlement et coaxialement à un axe (36) médian du récipient (26), dont au moins une tôle perforée est une tôle perforée d'un premier type (38) et au moins une tôle perforée est une tôle perforée d'un deuxième type (40), dans lequel
b) une tôle perforée d'un premier type (38) et une tôle perforée d'un deuxième type (40) ont chacune au moins un trou (42, 44) traversant et le au moins un trou (42) traversant d'une tôle perforée d'un premier type (38) est disposé de manière décalée radialement, rapporté à l'axe (36) médian du récipient (26), par rapport au au moins un trou (44) traversant d'une tôle perforée d'un deuxième type (40), et dans lequel
c) en position d'utilisation du récipient (26), l'ouverture (22) d'alimentation en air et de purge est constituée dans un fond (20) du récipient (26) et un raccord (24), pour la communication avec la au moins une chambre (8) secondaire, est constitué dans une partie supérieure du récipient (26), et dans lequel
d) les tôles perforées d'un premier type et d'un deuxième type (38, 40) sont empilées les unes sur les autres dans le récipient (26), de manière à ce qu'une tôle perforée d'un premier type (38) fasse face, au moins par endroits, à distance, à une tôle perforée d'un deuxième type (40), de manière à ce qu'une communication fluidique entre le au moins un trou (42) traversant d'une tôle perforée d'un premier type (38) et le au moins un trou (44) traversant d'une tôle perforée d'un deuxième type (40) puisse s'effectuer, et dans lequel
e) le courant d'air comprimé dû à un serrage ou un desserrage du cylindre de frein, entrant dans le récipient (26) au moyen de l'ouverture (22) d'alimentation en air et de purge, traverse les tôles (38, 40) perforées, successivement de bas en haut, et passe dans le raccord (24) de communication avec la au moins une chambre (8) secondaire ou le courant d'air comprimé dû à un serrage ou à un desserrage du cylindre de frein, pénétrant dans le récipient (26) au moyen du raccord (24) de communication avec la au moins une chambre (8) secondaire, traverse les tôles (38, 40) perforées, successivement du haut en bas et sort à l'atmosphère par l'ouverture (22) d'alimentation en air et de purge.

2. Dispositif de condensation suivant la revendication 1, **caractérisé en ce qu'**une tôle perforée d'un premier type (38) et une tôle perforée d'un deuxième type (40) forment chacune des pièces distinctes, dans lequel il est prévu des moyens (56) à ressort de compression, qui s'appuient sur le récipient (26), et par les forces de pression desquels la au moins une tôle perforée d'un premier type (38) est précontrainte sur la au moins une tôle perforée d'un deuxième type (40).

3. Dispositif de condensation suivant la revendication 2, **caractérisé en ce que** les moyens (56) à ressort de compression sont appuyés sur un couvercle (32) du côté de la tête du récipient (26) en forme de pot.

4. Dispositif de condensation suivant la revendication 3, **caractérisé en ce que** le couvercle (32) est fixé de manière amovible au récipient (26), dans lequel, après avoir séparé le couvercle (32) du récipient (26), la au moins une tôle perforée d'un premier type (38) et la au moins une tôle perforée d'un deuxième type (40) peuvent être retirées individuellement du récipient (26).

5. Dispositif de condensation suivant l'une des revendications précédentes, **caractérisé en ce que** le récipient (26) est constitué pour être bridé sur un fond du cylindre de frein.

6. Dispositif de condensation suivant l'une des revendications précédentes, **caractérisé en ce qu'**au moins une bague (60) d'étanchéité est disposée dans un espace (58) intermédiaire extérieur radialement, entre une tôle perforée d'un premier type (38) ou une tôle perforée d'un deuxième type (40) et la surface de pourtour intérieure radialement du récipient (26).

7. Dispositif de condensation suivant l'une des revendications précédentes, **caractérisé en ce que** la au moins une tôle perforée d'un premier type (38) et la au moins une tôle perforée d'un deuxième type (40) sont en contact, au moins par endroits.

8. Dispositif de condensation suivant l'une des revendications précédentes, **caractérisé en ce qu'**une tôle perforée d'un premier type (38) est constituée en forme de pot, en ayant un fond concave de forme conique en section transversale, et une tôle perforée d'un deuxième type (40) est conformée en couvercle de forme conique de section transversale concave fermant la tôle perforée en forme de pot d'un premier type (38).

9. Dispositif de condensation suivant l'une des revendications précédentes, **caractérisé en ce que**
a) dans le récipient (26) en forme de pot sont disposés, en étant empilés les uns sur les autres coaxialement à un axe (36) médian du récipient (26), au moins deux modules (34A, 34B, 34C) de condensation, distincts et constitués pareillement, et un module (34A, 34B, 34C) de condensation comporte, respectivement, une tôle perforée d'un premier type (38) et une tôle perforée d'un deuxième type (40), qui sont disposées perpendiculairement à l'axe (36) médian et en étant parallèles l'une à l'autre, dans lequel
b) les modules (34A, 34B, 34C) de compensation sont empilés les uns sur les autres dans le récipient (26), de manière à ce qu'un module (34A, 34B, 34C) de condensation fasse face, au moins par endroits, en étant à distance, par une tôle perforée d'un premier type (38), à une tôle perforée d'un deuxième type (40) du module (34A, 34B, 34C) de condensation faisant suite au un module (34A, 34B, 34C) de condensation, de manière à pouvoir avoir une communication fluidique entre les trous (42, 44) traversants des tôles perforées d'une premier et d'un deuxième types (38, 40) de différents modules (34A, 34B, 34C) de condensation, et dans lequel
c) le courant d'air comprimé dû à un serrage ou à un desserrage du cylindre de frein, entrant dans le récipient (26) au moyen de l'ouverture (22) d'alimentation en air et de purge, passe de bas en haut successivement dans les modules (34A, 34B, 34C) de condensation et passe dans le raccord (24) pour la communication avec la au moins une chambre (8) secondaire ou le courant d'air comprimé dû à un serrage ou à desserrage du cylindre de frein, entrant dans le récipient (26) au moyen du raccord (24) pour la communication avec la au moins une chambre (8) secondaire, passe de haut en bas successivement dans les modules (34A, 34B, 34C) de condensation et sort à l'atmosphère par l'ouverture (22) d'alimentation en air et de purge.

10. Dispositif de condensation suivant la revendication 9, **caractérisé en ce que** les tôles perforées d'un premier type et d'un deuxième type (38, 40) de modules (34A, 34B, 34C) de condensation différents sont en contact annulairement, au moins dans une partie extérieur radialement et sont à distance les uns des autres axialement dans une partie centrale.

11. Dispositif de condensation suivant l'une des revendications précédentes, **caractérisé en ce que** la au moins une tôle perforée d'un premier type (38) a au moins un trou (42) traversant extérieur radialement et la au moins une tôle perforée d'un deuxième type (40) a au moins un trou (44) traversant central ou au moins un trou traversant intérieur radialement.

12. Dispositif de condensation suivant l'une des revendications précédentes, **caractérisé en ce que** le récipient (26) a un fond (20) de forme conique, considéré en section transversale, et convexe, sur lequel l'ouverture (22) d'alimentation et de purge est constituée de manière centrale.

13. Dispositif de condensation suivant la revendication 12, **caractérisé en ce que**, dans l'ouverture (22) d'alimentation et de purge, au fond (20) du récipient (26), est maintenue une vis (46) trouée ayant au moins une ouverture (50, 52) mettant l'espace (30) intérieur du récipient (26) en communication avec l'atmosphère.

14. Cylindre de frein pneumatique de système de frein de véhicule, comprenant un piston (10) de frein, qui est disposé dans une enveloppe (2) de cylindre de frein et qui peut être mis en position de desserrage ou de serrage par alimentation en air et purge d'une chambre (12) de frein, le volume d'au moins une chambre (8) secondaire, se distinguant de la chambre (12) de frein, devenant plus petit ou plus grand en raison du serrage ou du desserrage du cylindre de frein, et il est prévu une ouverture (22) d'alimentation en air et de purge, mettant en communication la au moins une chambre (8) secondaire avec l'atmosphère, la au moins une chambre (8) secondaire communiquant avec l'ouverture (22) d'alimentation en air et de purge par un dispositif (18) de condensation suivant l'une des revendications précédentes.

15. Cylindre de frein suivant la revendication 1, **caractérisé en ce que** le récipient (26) a un volume, qui correspond sensiblement au volume d'air, qui, dans une course du piston (10) de frein, est refoulé de la chambre (8) secondaire ou est'aspiré dans la chambre secondaire.

16. Cylindre de frein suivant la revendication 14 ou 15, **caractérisé en ce que** c'est un cylindre de frein de service pneumatique et la chambre (8) secondaire reçoit un ressort de rappel, qui, dans la position de desserrage, précontraint un piston (10) de frein de service.

17. Cylindre de frein suivant la revendication 14 ou 15, **caractérisé en ce que** c'est un cylindre de frein pneumatique à ressort accumulateur et la chambre secondaire est une chambre à ressort de réception d'au moins un ressort accumulateur actionnant un piston de frein à ressort accumulateur.

18. Cylindre de frein suivant la revendication 16 et 17, **caractérisé en ce que** c'est un cylindre de frein combiné à frein de service et à ressort accumulateur.
